# DEMANDE DE BREVET EUROPEEN

(11) **EP 2 689 672 A1**
(43) Date de publication de la demande: **29.01.2014**
(21) Numéro de dépôt: 13173165.5
(22) Date de dépôt: 21.06.2013
(51) Int. Cl.: A23L 1/0522, A23L 1/0526, A23L 1/0534, A23L 1/39, A23G 9/34

(54) **Composition texturante pour la fabrication d'une préparation alimentaire sans matière grasse, sauce et procédé de fabrication d'une préparation alimentaire correspondante**

(30) Priorité: 26.07.2012 FR 1257240
(71) Demandeur: Soreal-Ilou, 35150 Brie (FR)
(72) Inventeur: TANGUY, Alain, 35410 CHATEAUGIRON (FR); GUYOT, Thomas, 35000 RENNES (FR)
(74) Mandataire: Ermeneux, Bertrand

(57) **Abrégé**

L'invention concerne une composition texturante et un procédé pour la fabrication d'une préparation alimentaire sans matière grasse, telle qu'une sauce ou un dessert glacé sans matière grasse.

Selon l'invention, un telle composition texturante comprend de 0,3 à 2% en masse de gomme de guar, de 1 à 15% en masse d'amidon modifié, de 0,5 à 3%, de préférence de 1,2 à 1,6%, et encore plus préférentiellement 1,4% en masse de gomme de cellulose, de 0,5 à 3%, de préférence de 1,2 à 1,6%, et encore plus préférentiellement 1,4% en masse de fibre de cellulose, et au moins une solution aqueuse.

## Description

### 1. Domaine de l'invention

Le domaine de l'invention est celui de l'agroalimentaire.

Plus précisément, l'invention concerne une composition texturante pour la fabrication d'une préparation alimentaire sans matière grasse et un procédé correspondant de fabrication d'une préparation alimentaire sans matière grasse.

L'invention trouve notamment une application dans la mise en oeuvre de sauces et de desserts de type crème glacée sans matière grasse.

### 2. Etat de la technique

Les émulsions alimentaires sont très appréciées des consommateurs, notamment du fait de leur onctuosité.

À titre d'exemple d'émulsions alimentaires bien connues, on peut citer des sauces émulsionnées telles que la mayonnaise, la vinaigrette, l'aïoli ou la sauce béarnaise, ou les crèmes glacées.

Les émulsions alimentaires connues sont généralement très caloriques. Ainsi par exemple, pour préparer une sauce émulsionnée selon une recette traditionnelle, on utilise au moins 70% en poids d'huile.

Il est donc préférable de limiter leur consommation pour des raisons évidentes de santé, et notamment pour lutter contre le surpoids et/ou le cholestérol.

Il existe donc une réelle attente des consommateurs pour des sauces qui procurent une satisfaction gustative équivalente à celle des sauces émulsionnées connues, mais soient fortement allégées en matières grasses.

On connait des compositions de sauces émulsionnées allégées en matières grasses, dans lesquelles la quantité d'huile utilisée a été réduite en employant des épaississants et en augmentant la quantité d'eau.

La teneur massique en matière grasse des sauces émulsionnées allégées connues reste cependant encore supérieure à 20%, et généralement comprise entre 30 et 40%.

On a par ailleurs cherché à mettre au point des sauces onctueuses sans matière grasse, sous forme de suspensions colloïdales.

On a ainsi proposé d'utiliser du polyester de sucrose, des protéines de lactosérum, de l'amidon, de la gomme de xanthane et/ou de la cellulose microcristalline en tant que substitut de matière grasse dans des sauces sans matière grasse connues.

L'utilisation de ces substituts de matière grasse n'est pas sans poser de difficultés.

Ainsi par exemple, le polyester de sucrose peut provoquer des désordres du système digestif, les protéines de lactosérum présentent l'inconvénient de s'agglomérer et/ou de se dégrader lorsqu'elles sont chauffées, la cellulose microcristalline colle au palet et provoque une sensation et d'assèchement des muqueuses et l'amidon, lorsqu'il est incorporé en quantité importante dans une sauce, tend à lui conférer une texture grumeleuse et plâtreuse et à lui ôter sa saveur, ce qui n'est pas satisfaisant.

Par ailleurs, les interactions possibles entre divers substituts de matière grasse de natures très différentes sont encore mal connues.

En outre, la fabrication de ces sauces sans matière grasse connues requiert plusieurs heures afin d'obtenir une préparation homogène et/ou nécessite de chauffer la préparation à une température supérieure à 50°C, et est donc couteuse en énergie.

### 3. Objectifs de l'invention

L'invention a donc notamment pour objectif de pallier les inconvénients de l'état de la technique cités ci-dessus.

Plus précisément l'invention a pour objectif de fournir une préparation alimentaire sans matière grasse dont la texture, l'aspect, et la saveur sont pour le consommateur, sensiblement similaires à ceux d'une émulsion alimentaire à base de matière grasse.

Un autre objectif de l'invention est de fournir une préparation alimentaire qui soit stable, et notamment dont les qualités rhéologiques ne s'altèrent pas après quelques heures ou quelques jours et qui n'exsude pas de liquide avec le temps.

L'invention a également pour objectif de fournir une préparation alimentaire sans matière grasse à teneur réduite en calories.

Encore un objectif de l'invention est de proposer une préparation alimentaire sans matière grasse qui soit d'un coût réduit.

Un objectif de l'invention est également de fournir une technique de fabrication d'une préparation alimentaire sans matière grasse qui soit simple à mettre en oeuvre, et peu coûteuse.

### 4. Exposé de l'invention

La Demanderesse a découvert que ces objectifs, ainsi que d'autres qui apparaitront par la suite, sont atteints de manière surprenante à l'aide d'une composition texturante pour la fabrication d'une préparation alimentaire sans matière grasse, telle qu'une sauce ou un dessert glacé sans matière grasse, remarquable en ce qu'elle comprend de 0,3 à 2% en masse de gomme de guar, de 1 à 15% en masse d'amidon modifié, de 0,5 à 3%, de préférence de 1,2 à 1,6%, et encore plus préférentiellement 1,4% en masse de gomme de cellulose, de 0,5 à 3%, de préférence de 1,2 à 1,6%, et encore plus préférentiellement 1,4% en masse de fibre de cellulose, et au moins une solution aqueuse.

La Demanderesse a en effet constaté qu'il se produisait, de façon inattendue, une synergie particulièrement efficace à un niveau intermoléculaire, entre la gomme de guar, l'amidon, la gomme de cellulose, ou carboxyméthylcellulose, et les fibres de cellulose lorsque ces composants sont mélangés dans les proportions massiques indiquées ci-dessus.

Cette synergie permet de conférer une texture onctueuse inédite, imitant celle du gras, à la composition texturante et à une préparation alimentaire sans matière grasse élaborée à partir de cette composition texturante.

Par ailleurs, la composition texturante obtenue permet de limiter de façon très sensible l'ampleur du phénomène de synérèse au sein d'une composition alimentaire humide ou liquide avec laquelle elle est mélangée en vu de former une préparation alimentaire sans matière grasse.

Il convient par ailleurs de noter que, selon une hypothèse vraisemblable, la gomme de cellulose pourrait permettre de former un film protecteur autour des fibres de cellulose, qui réduit la sensation désagréable d'astringence habituellement constatée en ingérant des préparations contenant des fibres de cellulose.

Selon un aspect particulier de l'invention, ladite solution aqueuse comprend au moins un agent acidifiant tel que de l'acide organique, et de préférence de l'acide citrique, de l'acide acétique et/ou de l'acide lactique.

On améliore ainsi la stabilité de la composition texturante dans le temps.

En outre, ceci confère une saveur acidulée à la préparation alimentaire.

Avantageusement, une telle composition texturante comprend un agent conservateur, tel que du sorbate de potassium.

Il peut également s'agir de benzoate de sodium ou de tout autre agent conservateur connu convenable, ou encore d'un mélange de plusieurs agents conservateurs.

Dans au moins un mode de réalisation particulier de l'invention, la composition texturante décrite ci-dessus comprend en outre un élément appartenant au groupe comprenant au moins :
- fruit ;
- légume ;
- sucre ;
- stabilisant ;
- antioxydant ;
- arôme alimentaire ;
- colorant.

À titre d'exemple de colorants pouvant être mise en oeuvre au sein d'une composition texturante selon l'invention, on peut citer des colorants naturels tels que la curcumine, le caramel, les carotémoïdes, les xanthophyles, le rouge de betterave, les anthocyanes, les chorophylles et des colorants de synthèse, tels que le rouge de cochenille ou le bleu patenté.

Préférentiellement ledit amidon modifié est un amidon modifié de pomme de terre.

Il peut notamment s'agir d'un amidon modifié de pomme de terre soluble à froid qui permet d'obtenir par simple mélange une composition sensiblement homogène et exempte d'agglomérats ou de grumeaux d'amidon. Il n'est donc pas nécessaire de chauffer la composition pour y dissoudre les amidons, ce qui permet de réaliser des économies d'énergie et de gagner du temps.

Il convient par ailleurs de noter que, de façon connue en soi, la gomme de cellulose qui intervient également dans la composition selon l'invention constitue avantageusement un additif soluble à froid.

Dans une variante, il peut également être prévu d'employer de l'amidon modifié de manioc, sans sortir du cadre de l'invention

L'invention concerne également un procédé de fabrication d'une préparation alimentaire sans matière grasse, telle qu'une sauce ou un dessert glacé sans matière grasse.

Selon l'invention, un tel procédé de fabrication comprend les étapes suivantes :
- obtention des composants d'une composition texturante similaire à l'une des compositions texturantes décrites ci-dessus ;
- mélange homogène sous cisaillement des composants de ladite composition texturante ;
- mélange final d'une masse dudit mélange homogène avec une masse d'une composition alimentaire exempte de matière grasse, de préférence une préparation lactée sans matière grasse, représentant 1 à 3 fois ladite masse dudit mélange homogène en proportions, de sorte à disperser ledit mélange homogène au sein de ladite composition alimentaire, pour obtenir ladite préparation alimentaire.

Le procédé de fabrication selon l'invention est donc particulièrement simple à mettre en oeuvre.

En particulier, on note que le mélange final de la composition alimentaire avec la composition texturante ne requiert pas de chauffage.

On notera par ailleurs que typiquement, la durée du mélange homogène est comprise entre 3 et 10 minutes et celle du mélange dans un émulseur est de l'ordre de 10 à 30 minutes.

Selon un mode de réalisation particulièrement avantageux de l'invention, un tel procédé de fabrication comprend une étape de filtration dudit mélange homogène au travers d'un tamis de maille inférieure ou égale à 120 micromètres, préférentiellement inférieure ou égale à 80 micromètres, préalable à ladite étape de mélange sous cisaillement.

On élimine ainsi d'éventuels impuretés, amas ou grumeaux résiduels.

De façon avantageuse, ladite étape de mélange homogène de ladite composition texturante et/ou ladite étape de mélange final est opérée sous vide.

Ainsi, on évite la formation de bulles ou de poches d'air dans le mélange homogène et dans le mélange final.

Selon un aspect particulier de l'invention, lors de ladite étape de mélange final, on ajoute du sel à ladite composition alimentaire dans laquelle ledit mélange homogène est dispersé.

Il convient de noter que le sel doit préférentiellement être incorporé à la préparation lors de l'étape de mélange final. La Demanderesse a en effet constaté qu'ajouter du chlorure de sodium à la composition texturante réduit significativement la viscosité de cette dernière, ce qui la rend inopérante.

Selon un mode de réalisation particulièrement avantageux de l'invention, ladite composition alimentaire comprend du fromage frais sans matière grasse, du yaourt sans matière grasse et/ou du fromage blanc sans matière grasse.

On peut ainsi obtenir une sauce ou un dessert de type crème glacée peu calorique.

Dans d'autres modes de réalisation de l'invention, il peut également être envisagé de mélanger avec la composition texturante une composition alimentaire à base de légume, telle que le lait de soja, et/ou de fruit.

Dans au moins un mode de réalisation particulier de l'invention, un tel procédé de fabrication comprend en outre une étape d'incorporation à ladite préparation alimentaire d'herbes aromatiques et/ou d'une épice, de sorte à conférer une apparence prédéterminée à ladite préparation alimentaire.

Dans des variantes de ce mode de réalisation de l'invention, de la poudre alimentaire colorée de tout type connu convenable, relevée ou neutre sur un plan gustatif, peut être employée pour modifier l'aspect de la préparation et/ou pour lui conférer un goût spécifique.

L'invention concerne encore une sauce sans matière grasse, ou un dessert de type crème glacé, obtenue par un procédé de fabrication tel que décrit ci-dessus mettant en oeuvre une composition alimentaire comprenant du fromage frais sans matière grasse, du yaourt sans matière grasse et/ou du fromage blanc sans matière grasse.

Dans des modes de réalisation particuliers de l'invention, il peut également être envisagé de fabriquer du lait, du yaourt, du fromage, de la colle ou des peintures à partir d'une composition texturante selon l'invention.

La composition texturante selon l'invention peut aussi être utilisée pour fabriquer des préparations alimentaires à faibles teneur en matière grasse, ou en d'autres termes des produits allégés en matière grasse.

### 5. Description détaillée de l'invention

D'autres caractéristiques et avantages de l'invention apparaitront plus clairement à la lecture d'exemples de réalisation non limitatifs, donnés à titre de simples illustrations et de l'unique figure annexée, qui est une représentation synoptique des étapes d'un exemple de procédé de fabrication d'une préparation alimentaire selon l'invention, sous forme de schéma bloc.

### Exemple 1 : exemple de composition texturante

On verse 30,0 kg de jus de citron concentré, 23,4 kg de vinaigre d'alcool et 100,0 kg d'eau, de préférence de l'eau adoucie, dans une cuve d'un mélangeur de type "cutter" à six couteaux, d'une contenance maximale de 250 litres. Après avoir démarré le cutter en vitesse lente, on verse progressivement dans la cuve 18 kg de poudre d'amidon modifié de pomme de terre soluble à froid, 20 kg de sucre en poudre, 2,8 kg de poudre de carboxyméthylcellulose, 2,8 kg de poudre de fibres de cellulose de la marque AVICEL(marque déposée), 0,2 kg de granulés de sorbate de potassium et 0,8 kg de poudre d'ail déshydraté. Dès que les poudres et les granulés sont partiellement hydratés, on mélange la composition à une vitesse de 3000 tours/minutes pendant 6 minutes, jusqu'à obtenir 198 kilogrammes d'une composition texturante homogène, se présentant sous la forme d'une pâte dans laquelle les poudres et les granulés sont totalement hydratés.

Dans ce mode de réalisation particulier de l'invention, le cutter est avantageusement équipé d'une pompe à vide de sorte à s'assurer de l'absence de bulle ou de poche d'air au sein de la composition texturante.

La pâte est ensuite avantageusement pompée au travers d'un filtre de maille 80 microns, permettant de retirer des impuretés et des grumeaux résiduels.

### Exemple 2 : exemple de sauce

On transfère la composition texturante de l'exemple 1 dans un mélangeur-émulseur sous vide à haut cisaillement de type "coruma", à laquelle on ajoute 100 kg de fromage frais à 0% de matière grasse. On démarre l'émulseur jusqu'à ce qu'il atteigne une vitesse de 3000 tours/minutes, et on incorpore progressivement 289 kg supplémentaires de fromage frais à 0% de matière grasse et 7 kg de sel, par recyclage, sur une période de 15 minutes. Au terme de cette période, on constate que la texture de la sauce obtenue est homogène et exempte de grumeaux.

On incorpore alors 6 kg de basilic finement haché à cette sauce et on mélange à nouveau la sauce de façon à répartir les morceaux de basilic de façon homogène au sein de celle-ci.

L'inspection et la dégustation de cette sauce révèlent une texture et une flaveur qui s'apparentent à celles d'un aïoli agrémenté de basilic.

### Exemples 3 à 5 : autres exemples de composition texturante

On donne ci-après à titre d'exemples la formulation de trois compositions texturantes selon l'invention. Les quantités de chaque constituant de chacune de ces trois compositions sont données en pourcentage pondéral dans les tableaux ci-dessous.

### Exemple 3 :

| Produit | % |
|---|---|
| Amidon modifié | 3 |
| Gomme de guar | 1,8 |
| Gomme de cellulose | 1,6 |
| Fibres Avicel® | 1,2 |
| Purée de fruits | 8,0 |
| Colorant (caramel) | 0,1 |
| vinaigre | 2,0 |
| Eau | 79,4 |

La composition texturante correspondant à l'exemple 3 entre dans la préparation d'une sauce aigre-douce onctueuse. On peut notamment utiliser de la purée d'ananas ou de la purée de baies rouges.

### Exemple 4 :

| Produit | % |
|---|---|
| Amidon modifié | 12,4 |
| Gomme de guar | 0,6 |
| Gomme de cellulose | 1,3 |
| Fibres Avicel® | 1,3 |
| Purée de légumes | 15,0 |
| Conservateur (benzoate de sodium) | 0,4 |
| Acide acétique | 2,0 |
| Eau | 66,0 |

De la purée de concombre peut par exemple être utilisée dans cet exemple de composition texturante, afin d'obtenir une sauce rappelant le Tsasiki.

### Exemple 5 :

| Produit | % |
|---|---|
| Amidon modifié | 5,0 |
| Gomme de guar | 1,2 |
| Gomme de cellulose | 2,0 |
| Fibres Avicel® | 0,7 |
| Sucre | 4,0 |
| Arome vanille | 0,2 |
| Eau | 86,9 |

### Exemple 6 : exemple de dessert glacé

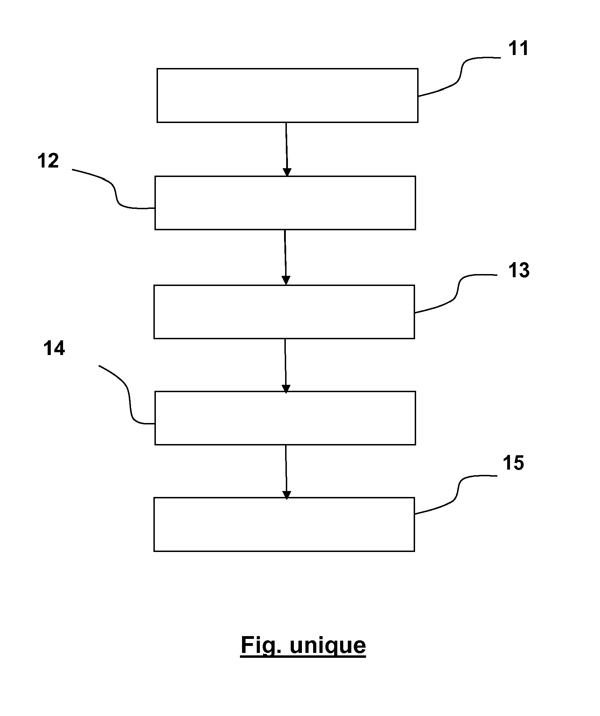

Sur la figure 1, on a représenté sous forme de schéma bloc les étapes d'un procédé de fabrication d'un dessert glacé selon l'invention à partir des composés de la composition texturante de l'exemple 5 précitée et d'une masse de fromage blanc à 0% de matière grasse égale à celle de la composition texturante.

Dans une étape 11, on mélange sous cisaillement les composés de la composition texturante de sorte à obtenir une composition homogène.

La composition texturante homogène est filtrée dans une étape 12 dans un filtre de maille inférieure ou égale à 120 micromètres.

On mélange la composition texturante filtrée et le fromage blanc sans matière grasse pendant au moins 10 minutes et de préférence pendant au moins 20 minutes, dans une étape de mélange final 13.

La préparation obtenue est conditionnée en barquette (étape 14) et est enfin introduite dans un tunnel de surgélation afin de réfrigérer la préparation (étape 15).

Les exemples ici décrits n'ont pas pour but de limiter la portée de l'invention. En conséquence, il pourra y être apporté de nombreuses modifications sans sortir du cadre de l'invention telle que définie par les revendications.

## Revendications

1. Composition texturante pour la fabrication d'une préparation alimentaire sans matière grasse, telle qu'une sauce ou un dessert glacé sans matière grasse, **caractérisée en ce qu'**elle comprend de 0,3 à 2% en masse de gomme de guar, de 1 à 15% en masse d'amidon modifié, de 0,5 à 3%, de préférence de 1,2 à 1,6%, et encore plus préférentiellement 1,4% en masse de gomme de cellulose, de 0,5 à 3%, de préférence de 1,2 à 1,6%, et encore plus préférentiellement 1,4% en masse de fibre de cellulose, et au moins une solution aqueuse.

2. Composition texturante selon la revendication 1, **caractérisée en ce que** ladite solution aqueuse comprend au moins un agent acidifiant tel que de l'acide organique, et de préférence de l'acide citrique, de l'acide acétique et/ou de l'acide lactique.

3. Composition texturante selon l'une quelconque des revendications 1 et 2, **caractérisée en ce qu'**elle comprend un agent conservateur, tel que du sorbate de potassium.

4. Composition texturante selon l'une quelconque des revendications 1 à 3, **caractérisée en ce qu'**elle comprend en outre un élément appartenant au groupe comprenant au moins :
- fruit ;
- légume ;
- sucre ;
- stabilisant ;
- antioxydant ;
- arôme alimentaire ;
- colorant.

5. Composition texturante selon l'une quelconque des revendications 1 à 4, **caractérisée en ce que** ledit amidon modifié est un amidon modifié de pomme de terre.

6. Procédé de fabrication d'une préparation alimentaire sans matière grasse, telle qu'une sauce ou un dessert glacé sans matière grasse, **caractérisé en ce qu'**il comprend les étapes suivantes :
- obtention des composants d'une composition texturante selon l'une quelconque des revendications 1 à 5 ;
- mélange homogène sous cisaillement desdits composants ;
- mélange final d'une masse dudit mélange homogène avec une masse d'une composition alimentaire exempte de matière grasse, de préférence une préparation lactée sans matière grasse, représentant 1 à 3 fois ladite masse dudit mélange homogène en proportions, de sorte à disperser ledit mélange homogène au sein de ladite composition alimentaire, pour obtenir ladite préparation alimentaire.

7. Procédé de fabrication d'une préparation alimentaire sans matière grasse selon la revendication 6, **caractérisé en ce qu'**il comprend une étape de filtration dudit mélange homogène au travers d'un tamis de maille inférieure ou égale à 120 micromètres, préférentiellement inférieure ou égale à 80 micromètres, préalable à ladite étape de mélange dans un émulseur.

8. Procédé de fabrication d'une préparation alimentaire sans matière grasse selon l'une quelconque des revendications 6 et 7, **caractérisé en ce que** ladite étape de mélange homogène de ladite composition texturante et/ou ladite étape de mélange final est opérée sous vide.

9. Procédé de fabrication d'une préparation alimentaire sans matière grasse selon l'une quelconque des revendications 6 à 8, **caractérisé en ce que** lors de ladite étape de mélange final, on ajoute du sel à ladite composition alimentaire dans laquelle ledit mélange homogène est dispersé.

10. Procédé de fabrication d'une préparation alimentaire sans matière grasse selon l'une quelconque des revendications 6 à 9, **caractérisé en ce que** ladite composition alimentaire comprend du fromage frais sans matière grasse, du yaourt sans matière grasse et/ou du fromage blanc sans matière grasse.

11. Procédé de fabrication d'une préparation alimentaire sans matière grasse selon l'une quelconque des revendications 6 à 10, **caractérisé en ce qu'**il comprend en outre une étape d'incorporation à ladite préparation alimentaire d'herbes aromatiques et/ou d'une épice, de sorte à conférer une apparence prédéterminée à ladite préparation alimentaire.

12. Sauce sans matière grasse obtenue par le procédé de fabrication selon la revendication 10.
